(19) Europäisches Patentamt
European Patent Office
Office européen des brevets

(11) Veröffentlichungsnummer: **0 186 847 B1**

(12) **EUROPÄISCHE PATENTSCHRIFT**

(45) Veröffentlichungstag der Patentschrift: **20.02.91**

(51) Int. Cl.⁵: **C08L 83/08**

(21) Anmeldenummer: **85116077.0**

(22) Anmeldetag: **17.12.85**

Die Akte enthält technische Angaben, die nach dem Eingang der Anmeldung eingereicht wurden und die nicht in dieser Patentschrift enthalten sind.

(54) **Bei Verdünnen mit Wasser durchsichtige Gemische ergebende, Polysiloxan enthaltende Zusammensetzungen.**

(30) Priorität: **28.12.84 DE 3447636**

(43) Veröffentlichungstag der Anmeldung:
**09.07.86 Patentblatt 86/28**

(45) Bekanntmachung des Hinweises auf die Patenterteilung:
**20.02.91 Patentblatt 91/08**

(84) Benannte Vertragsstaaten:
**AT BE CH DE FR GB IT LI NL**

(56) Entgegenhaltungen:
**EP-A- 0 068 671**
**US-A- 3 890 269**
**US-A- 4 247 330**

(73) Patentinhaber: **WACKER-CHEMIE GMBH**
**Prinzregentenstrasse 22**
**D-8000 München 22(DE)**

(72) Erfinder: **Mayer, Hans, Dr. Dipl.-Chem.**
**Friedrich-Ebert-Strasse 18**
**D-8263 Burghausen(DE)**
Erfinder: **Deubzer, Bernward, Dr. Dipl.-Chem.**
**Virchowstrasse 14**
**D-8263 Burghausen(DE)**
Erfinder: **Iretzberger, Petra**
**Oberzaun 21 1/2**
**D-8346 Simbach(DE)**
Erfinder: **Mühlhofer, Rudolf**
**Mehringer Strasse 57**
**D-8263 Burghausen(DE)**
Erfinder: **Wilhelm, Hermann**
**Südtiroler Strasse 22**
**A-5280 Braunau(AT)**

**EP 0 186 847 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Aus EP-OS 0 068 671 sind bei Verdünnen mit Wasser durchsichtige Gemische ergebende, Organopolysiloxan enthaltende Zusammensetzungen bekannt. Diese Zusammensetzungen enthalten Salz von wasserlöslicher organischer oder anorganischer Säure und Organopolysiloxan, das zusätzlich zu anderen Siloxaneinheiten solche Siloxaneinheiten enthält, die SiC-gebundene Reste mit basischem Stickstoff aufweisen, eine in solchem Salz lösliche Siliciumverbindung, wie Methyltrimethoxysilan, und wasserlösliches Lösungsmittel.

Es ist Aufgabe der Erfindung, bei Verdünnen mit Wasser durchsichtige Gemische ergebende, Polysiloxan enthaltende Zusammensetzungen bereitzustellen, die besonders leicht mit Wasser verdünnbar und in unverdünnter Form sowie in mit Wasser verdünnter Form besonders beständig sind. Diese Aufgabe wird durch die Erfindung gelöst.

Gegenstand der Erfindung sind bei Verdünnen mit Wasser durchsichtige Gemische ergebende, Polysiloxan enthaltende Zusammensetzungen, die als wesentliche Bestandteile

(A) Salz von wasserlöslicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, und

(B) organische Siliciumverbindung mit basischem Stickstoff in Mengen von 0 bis 0, 5 Gewichtsprozent, bezogen auf das Gewicht solcher organischer Siliciumverbindung, enthalten, dadurch gekennzeichnet, daß sie frei von wasserlöslichem Lösungsmittel oder Oktanolen sind oder solches Lösungsmittel oder Oktanole in Mengen von höchstens 5 Gewichtsprozent, bezogen auf das Gewicht von Bestandteil (A), enthalten.

In EP-OS 00 68 671 wird zwar Oktanol als Beispiel eines wasserlöslichen Lösungsmittels genannt. Beispielsweise aus O.-A. Neumüller "Römpps Chemie-Lexikon", Stuttgart, 1974, Seite 2400 ist jedoch bekannt, daß die Oktanole nicht oder nur geringfügig wasserlöslich sind. Somit wird der Fachmann bei der Nacharbeitung von EP-OS 00 68 671 nur die in dieser Druckschrift genannten, wirklich wasserlöslichen Lösungsmittel verwenden. Folglich konnte diese Druckschrift den Gegenstand der Erfindung nicht nahelegen.

Die Polysiloxane, durch deren Umsetzung mit wasserlöslicher organischer oder anorganischer Säure Bestandteil (A) der erfindungsgemäßen Zusammensetzungen erhältlich ist, sind vorzugsweise solche aus Einheiten der Formel

$$R_xR^1_y(OR^2)_zSiO_{\frac{4-x-y-z}{2}}$$

worin R gleiche oder verschiedene, einwertige, von basischem Stickstoff freie, SiC-gebundene organische Reste oder Wasserstoff, $R^1$ die einwertigen, SiC-gebundenen Reste mit basischem Stickstoff, die ebenfalls gleich oder verschieden sein können, $R^2$ Wasserstoff oder gleiche oder verschiedene Alkylreste mit 1 bis 4 Kohlenstoffatom(en) je Rest bedeutet, x 0, 1 , 2 oder 3 durchschnittlich 0 bis 2 , vorzugsweise 0 bis 1 ,8, y 0 oder 1 , durchschnittlich 0,1 bis 0,6, vorzugsweise 0,15 bis 0,30 und z 0, 1 , 2 oder 3, durchschnittlich 0 bis 0,8, vorzugsweise 0,01 bis 0,6 ist und die Summe der jeweiligen Durchschnittswerte von x, y und z höchstens 3,4 ist.

Wenn eine Vernetzung oder Verhinderung eine Reemulgierbarkeit von Bestandteil (A) durch Wasser bei bzw. nach der endgültigen Verwendung der erfindungsgemäßen Zusammensetzungen erwünscht ist, beispielsweise bei der Verwendung der erfindungs gemäßen Zusammensetzungen als Bestandteile von Hydrophobiermitteln z.B. für Baustoffe, muß z durchschnittlich mindestens 0,1 sein. Wenn aber eine Vernetzung oder Verhinderung einer Reemulgierbarkeit von Bestandteil (A) durch Wasser bei bzw. nach der endgültigen Verwendung der erfindungsgemäßen Zusammensetzungen nicht erwünscht oder nicht erforderlich ist, wie bei der Verwendung als Bestandteil von Mitteln zur Glanz- und Griffverbesserung von Kunstleder oder natürlichem Leder, so ist bevorzugt, daß z den Wert 0 hat.

Beispiele für von basischem Stickstoff freie, SiC-gebundene organische Reste R sind insbesondere Kohlenwasserstoffreste mit 1 bis 20 Kohlenstoffatomen je Rest, wie Alkylreste, z.B. der Methyl-, Ethyl-, n-Propyl- und Isopropylrest, sowie Octyl- und Tetradecylreste; aliphatische Kohlenwasserstoffreste mit mindestens einer Doppelbindung, z.B. der Vinyl- und Allylrest sowie Butadienylreste; cycloaliphatische Kohlenwasserstoffreste, z.B. der Cyclopentyl- und Cyclohexylrest sowie Methylcyclohexylreste; aromatische Kohlenwasserstoffreste, z.B. der Phenylrest und Naphthylreste; Alkarylreste, z.B. Tolylreste; und Aralkylreste, z.B. der Benzylrest. Der Methylrest ist bevorzugt. Der Phenylrest ist ebenfalls bevorzugt. Vorzugsweise ist an jedes Siliciumatom, an das ein Wasserstoffatom gebunden ist, wo also R Wasserstoff bedeutet, auch ein Kohlenwasserstoffrest, insbesondere ein Methylrest, gebunden.

Organopolysiloxane, die in ein und demselben Molekül sowohl Si-gebundenen Wasserstoff als

auch mindestens einen SiC-gebundenen Rest mit basischem Stickstoff aufweisen, sind ebenfalls Gegenstand der Erfindung.

Als einwertige, SiC-gebundene Reste mit basischem Stickstoff, also als Reste $R^1$, sind solche der Formel

$$R^3_2NR^4-$$

bevorzugt, worin $R^3$ Wasserstoff oder gleiche oder verschiedene Alkyl- oder Aminoalkylreste und $R^4$ einen zweiwertigen Kohlenwasserstoffrest bedeutet.

Die Beispiele für Alkylreste R gelten in vollem Umfang auch für die Alkylreste $R^3$. Vorzugsweise ist jedoch an jedes Stick stoffatom in den Resten der Formel
$R^3_2NR^4$-
mindestens ein Wasserstoffatom gebunden.

Beispiele für zweiwertige Kohlenwasserstoffreste $R^4$ sind der Methylen- und Ethylenrest sowie Propylen-, Butylen-, Cyclohexylen, Octadecylen-, Phenylen- und Butenylenreste. Insbesondere wegen der leichteren Zugänglichkeit ist der n-Propylenrest bevorzugt.

Besonders bevorzugt als einwertiger, SiC-gebundener Rest mit basischem Stickstoff ist der Rest der Formel
$H_2N(CH_2)_2NH(CH_2)_3$ -.
Weitere Beispiele für SiC-gebundene Reste mit basischem Stickstoff sind solche der Formeln

$H_2N(CH_2)_3$ -
$H_2N(CH_2)_2$ -
$H_3CHN(CH_2)_3$ -
$H_2N(CH_2)_5$ -
$H(NHCH_2CH_2)_3$ - und
$n\text{-}C_4H_9NH(CH_2)_2NH(CH_2)$-.

Beispiele für Alkylreste $R^2$ sind insbesondere der Methyl-, Ethyl- und Isopropylrest.

Die Polysiloxane, die zusätzlich zu anderen Siloxaneinheiten solche Siloxaneinheiten enthalten, die einwertige, SiC-gebundene Reste mit basischem Stickstoff aufweisen, können in bekannter Weise beispielsweise durch Äquilibrieren bzw. Kon densieren von z.B. gamma-Aminoethylaminopropyltrimethoxysilan oder gamma-Aminoethylaminopropylmethyldimethoxysilan oder Gemischen aus derartigen Silanen mit organischen Polysiloxanen, die frei von basischem Stickstoff sind, hergestellt werden. Vorzugsweise haben die dabei verwendeten Polysiloxane ein Molekulargewicht von mindestens 350 g/Mol. Diese Polysiloxane können beispielsweise sein:
Monoorganopolysiloxane, wie Monoalkyl- oder Monoarylpolysiloxane,z. B. solche der Summenformel

$CH_3Si(OC_2H_5)_{0,8}O_{1,1}$
oder $C_6H_5Si(OC_2H_5)_{0,72}O_{1,14}$

Hydrolysate von Isooktyltrichlorsilan, Hischhydrolysate von Phenyltrichlorsilan und n-Propyltrichlorsilan, Methoxygruppen aufweisende Mischpolymere aus Monomethylsiloxan- und Monoisooktylsiloxaneinheiten, durch Trimethylsiloxygruppen endblokkierte Dimethylpolysiloxane, in den endständigen Einheiten je eine Si-gebundene Hydroxylgruppe aufweisende Dimethylpolysiloxane, als endständige Einheiten solche der Formel
$-Si(CH_3)_2OR^2$ .
aufweisende Dimethylpolysiloxane, wobei $R^2$ die oben dafür angegebene Bedeutung hat, Polyethylsilikate, Methylhydrogenpolysiloxane und Mischpolymere aus z.B. Dimethysiloxan-und Methylhydrogensiloxan-und/oder Monomethylsiloxaneinheiten.

Vorzugsweise sind die erfindungsgemäßen Organopolysiloxane, die in ein und demselben Molekül sowohl Si-gebundenen Wasserstoff als auch mindestens einen SiC-gebundenen Rest mit basischem Stickstoff aufweisen, solche, die durch Äquilibrieren von durch Trimethylsiloxygruppen endblockiertem Methylhydrogenpolysiloxan mit gamma-Aminoethylaminopropyltrimethoxysilan erhältlich sind.

Die wasserlöslichen organischen oder anorganischen Säuren, die zur Herstellung von Bestandteil (A) der erfindungsgemäßen Zusammensetzungen verwendet werden, können die gleichen sein, die auch bisher zur Herstellung von Salzen von wasserlöslicher organischer oder anorganischer Säure und Polysiloxan mit basischen Stickstoff aufweisenden SiC-gebundenen Resten eingesetzt werden konnten. Beispiele für derartige Säuren sind Salzsäure, Schwefelsäure, Essigsäure, Propionsäure und Diethylhydrogenphosphat. Essigsäure und Propionsäure sind bevorzugt.

Verbindungen, die zur Herstellung der erfindungsgemäßen Zusammensetzungen als Bestandteil (A) verwendet werden können, sind bereits bekannt. Hierzu wird außer auf die bereits eingangs genannte EP-OS 00 68 671 z.B. auf US 3 890 269, US 3 355 424, und US 4 247 330 verwiesen.
Der Begriff "basischer Stickstoff", wie er hier in der Beschreibung und mindestens einem der Patentansprüche in Verbindung mit Mengenangaben gebraucht wird, bezieht sich auf Stickstoff, berechnet als Element.

Beispiele für organische Siliciumverbindungen (B) mit basischem Stickstoff in Mengen von 0 bis 0,5 Gewichtsprozent, bezogen auf das Gewicht dieser organischen Siliciumverbindungen, sind Tetraalkoxysilane, wie Tetraethylsilikat, Organoalkoxysilane bzw. Organoalkoxyalkylenoxysilane, wie Dimethyldimethoxysilan, Methyltrimethoxysilan, Phenyltrimethoxysilan, Vinyltrimethoxysilan, n-Octyltrimethoxysilan, Isooktyltrimethoxysilan, 2-Ethylhexyltrimethoxysilan, Methyltris-(methoxyethylenoxy)-silan, Dimethyldiethoxysilan und n-Octadecyltrimethoxysilan, Siloxane mit 2 bis 10 Siloxaneinheiten je Molekül, wie Hexamethyldisiloxan, 1,1,3,3-Tetramethoxy-1,3-dimethyldisiloxan und 1,1,3,3-Tetramethyl-1,3-divinyldisiloxan, alle die oben genannten Beispiele für von basischem Stickstoff freie Polysiloxane, und Siloxane der Formel

$$R_{x'}R^1_{y'}(OR^2)_zSiO_{\frac{4-x'-y'-z}{2}}$$

worin R, $R^1$ , $R^2$ und z jeweils die oben dafür angegebene Bedeutung haben, x' 0, 1 , 2 oder 3, durchschnittlich 0 bis 2, und y' 0 oder 1, durchschnittlich 0,01 bis zu einem Wert, der einem Gehalt von höchstens 0, 5 Gewichtsprozent basischem Stickstoff, bezogen auf das Gewicht des jeweiligen Siloxans, entspricht, ist.

Vorzugsweise enthalten die erfindungsgemäßen Zusammensetzungen Bestandteil (B) in Mengen von 0,1 bis 7 Gewichtsteilen, insbesondere 1,2 bis 4 Gewichtsteilen je Gewichtsteil Bestandteil (A).

Zumindest dann, wenn Bestandteil (B) nicht zu mindestens 0,1 Gewichtsteilen je Gewichtsteil Bestandteil (A) aus mindestens einer organischen Siliciumverbindung mit einem Molekulargewicht von höchstens 600 g/Mol, vorzugsweise höchstens 500 g/Mol, besteht, so müssen die erfindungsgemäßen Zusammensetzungen zusätzlich zu den Bestandteilen (A) und (B) organisches Lösungsmittel, das bei 20° C und 1020 hPa (abs.) höchstens zu einem Gewichtsteil in 100 Gewichtsteilen Wasser löslich und von Halogenatomen frei ist, mit Ausnahme von Oktanolen als Bestandteil (C) enthalten. Als derartige Lösungsmittel sind Carbonsäureester, wie n-Butylacetat, sowie aromatische Kohlenwasserstoffe, wie Toluol und Xylole, bevorzugt. Weitere Beispiele für derartige Lösungsmittel sind aliphatische Alkohole mit 6 bis 18 Kohlenstoffatomen je Molekül (mit Ausnahme von Octanolen) wie n-Hexanol und n-Heptanol.

Vorzugsweise wird Bestandteil (C) in Mengen von 0,1 bis 2,0 Gewichtsteilen, insbesondere 0,2 bis 1,0 Gewichtsteilen, je Gewichtsteil Bestandteil (A) bei der Bereitung der erfindungsgemäßen Zusammensetzungen eingesetzt.

Die erfindungsgemäßen Zusammensetzungen werden durch Vermischen von Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans aufweisen, mit wasserlöslicher organischer oder anorganischer Säure zur Bildung des Bestandteils (A) und mit Bestandteil (B) sowie erforderlichenfalls mit Bestandteil (C) bis zur Bildung einer klaren Lösung hergestellt. Vorzugsweise wird bei diesem Vermischen auf 70° C bis 100° C erwärmt.

Die erfindungsgemäßen Zusammensetzungen bzw. durch Verdünnen der erfindungsgemäßen Zusammensetzungen mit Wasser erhaltenen Gemische eignen sich nicht nur zur bereits eingangs erwähnten Glanz- oder Griffverbesserung von Kunstleder oder natürlichem Leder, sondern auch beispielsweise als Mittel zum Wasserabweisendmachen in oder auf Gasbeton, als Zusatz für Gips, Verputze und mit Wasser verdünnbare Anstrichfarben um diese Stoffe wasserabweisend zu machen, allgemein als Mittel zum Wasserabweisend- und gegebenenfalls Plakat-abweisendmachen von Baustoffen, einschließlich Fassaden, Straßen und Brükken, als Mittel, die zur Sperrung von aufsteigender Mauerfeuchtigkeit durch Löcher in die Mauer eingebracht werden , oder als Mittel zur Sperrung von anderer unerwünschter Wasserwanderung,als Mittel zur Imprägnierung von feinteiligen anorganischen Stoffen, wie Perlit, Vermiculit oder Füllstoffen als Mittel zum Wasserabweisendmachen von Metallen, Textilien, Leder oder Papier, als Zusätze für Polituren, als Mittel zum Wasserabweisendmachen von Wärmedämmstoffen, als Dispergiermittel bzw. als Zusätze bei der Polymerisation von aliphatische Kohlenstoff-Kohlenstoff-Doppelbindungen enthaltenden Monomeren, wie Vinylchlorid oder Vinylacetat, und als Verlaufverbesserungsmittel in mit Wasser verdünnbaren Lacken, einschließlich Lacken, die bei der kataphoretischen Elektrotauchlackierung verwendet werden, sowie für alle übrigen Anwendungen, bei denen organische Siliciumverbindungen in mit Wasser verdünnter Form eingesetzt werden können.

In den folgenden Beschreibungen der Herstellung von Organopolysiloxanen mit basischem Stickstoff und in den folgenden Beispielen beziehen sich alle Angaben von Prozentsätzen und Teilen auf das Gewicht, soweit nichts anderes angegeben ist.

a) In einen mit Rührer, Tropftrichter und Rückflußkühler ausgestatteten 1 l-Dreihalskolben werden unter Rühren zu einem auf 100° C erwärmten Gemisch aus 250 g eines Mischhydolysats von Phenyltrichlorsilan und n-Propyltrichlorsilan im Molverhältnis von 2:1 mit einem durchschnittlichen Molekulargewicht von 1500 g/Mol und 5,4 bis 7,4 % Si-gebundenen Hydroxylgruppen in 250 g Toluol und 0,1 g KOH in 2 g Methanol tropfenweise innerhalb einer Stunde 103,5 g N-(2-Aminoethyl)-3-aminopropyltrimethoxysilan gegeben. Nachdem anschließend unter Rüh ren 6,5 Stunden zum Sieden unter Rückfluß erwärmt und dann auf 30° C gekühlt wurde, werden 1,17 ml 10 %-ige Salzsäure in den Kolben gegeben. Nach dem Abdestillieren von 172 g des Kolbeninhalts werden in den Kolben 172 g Toluol gegeben und die so erhaltene Lösung filtriert. Das so

erhaltene Organopolysiloxan enthält 3,7 % basischen Stickstoff, bezogen auf sein Gewicht.

b) In der unter a) beschriebenen Vorrichtung werden unter Rühren zu einem Gemisch aus 0,2g KOH in 4 g Methanol und 500 g des Organopolysiloxans der Summenformel

$CH_3\ Si(OC_2H_5)_{0,8}O_{1,1}$

mit einem durchschnittlichen Molekulargewicht von etwa 600 g/ Mol und einer Viskosität von etwa 20 $mm^2.s^{-1}$ 150 g N-(2-Aminoethyl)-3-aminopropyltrimethoxysilan gegeben und das so erhaltene Gemisch 6 Stunden zum Sieden unter Rückfluß erwärmt; dann wird auf 30° C gekühlt und mit 2,5 ml 10 %-iger Salzsäure vermischt. Durch Erwärmen auf bis zu 140° C wird schließlich das Methanol abdestilliert und das so erhaltene Organopolysiloxan von KCl durch Filtrieren befreit. Das Organopolysiloxan enthält 2,9 % basischen Stickstoff, bezogen auf sein Gewicht.

c) Die vorstehend unter b) beschriebene Arbeitsweise wird wiederholt mit der Abänderung, daß 500 g eines in den endständigen Einheiten je eine Si-gebundene Hydroxylgruppe aufweisenden Dimethylpolysiloxans mit einem durchschnittlichen Molekulargewicht von etwa 4000 g/Mol anstelle des Monomethylpolysiloxans verwendet werden. Das so erhaltene Organopolysiloxan enthält 2,9 % basischen Stickstoff, bezogen auf sein Gewicht.

d) Die oben unter b) beschriebene Arbeitsweise wird wiederholt mit der Abänderung, daß 500 g des Organopolysiloxans der Summenformel

$C_6H_5Si(OC_2H_5)_{0,72}O_{1,14}$

mit einem durchschnittlichen Molekulargewicht von etwa 3000 g/ Mol und einer Viskosität von etwa 25 000 $mm^2.s^{-1}$ bei 25° C anstelle des Monomethylpolysiloxans verwendet werden. Das so erhaltene Organopolysiloxan enthält 2,9 % basischen Stickstoff, bezogen auf sein Gewicht.

e) Die oben unter b) beschriebene Arbeitsweise wird wiederholt mit der Abänderung, daß 250 g eines Hydrolysats von Isooktyltrichlorsilan mit einem durchschnittlichen Molekulargewicht von etwa 2000 g/Mol in 250 g Toluol anstelle des Monomethylpolysiloxans verwendet werden. Das so erhaltene Polysiloxan enthält 1,4 % basischen Stickstoff, bezogen auf sein Gewicht.

f) Die oben unter b) beschriebene Arbeitsweise wird wiederholt mit der Abänderung, daß 500 g eines Methoxygruppen aufweisenden Mischpolymerisats aus 75 Molprozent Monomethylsiloxan-und 25 Molprozent Monoisooktylsiloxaneinheiten mit einem durchschnittlichen Molekulargewicht von etwa 400 g/Mol anstelle des Monomethylpolysiloxans verwendet werden. Das so erhaltene Organopolysiloxan enthält 2,9 % basischen Stickstoff, bezogen auf sein Gewicht.

g) Ein Gemisch aus 399 g eines durch Trimethylsiloxygruppen endblockierten Methylhydrogenpolysiloxans mit einer Viskosität von etwa 20 $mm^2.s^{-1}$ bei 25° C und 165 g N-(2-Aminoethyl)-3-aminopropyltrimethoxysilan wird 6 Stunden zum Sieden unter Rückfluß erwärmt. Das so erhaltene Orgnaopolysiloxan enthält 3,7 % Stickstoff, bezogen auf sein Gewicht.

h) In der unter a) beschriebenen Vorrichtung werden unter Rühren zu einem Gemisch aus 0,2 g KOH in 4 g Methanol und 500 g eines Polyethylsilikats mit einem durchschnittlichen Molekulargewicht von etwa 450 g/Mol und einer Viskosität von 4 $mm^2.s^{-1}$ 150 g N-(2-Aminoethyl)-3-aminopropyltrimethoxysilan gegeben. Das so erhaltene Gemisch wird 6 Stunden auf 100° C erwärmt. Dann wird auf 30° C gekühlt und mit 2,5 ml 10 %-iger Salzsäure vermischt. Durch Erwärmen auf bis zu 130° C werden 1,06 g des Kolbeninhalts abdestilliert und das so erhaltene Polysiloxan durch Filtrieren vom KCl befreit. Das Polysiloxan enthält 3,7 % basischen Stickstoff, bezogen auf sein Gewicht.

i) In der unter a) beschriebenen Vorrichtung werden unter Rühren zu einem Gemisch aus 0,4 g KOH in 8 g Methanol und 600 g eines durch Trimethylsiloxygruppen endblockierten Dimethylpolysiloxans mit einer Viskosität von 350 $mm^2.s^{-1}$ bei 25° C 200 g N-(2-Aminoethyl)-3-aminopropylmethyldimethoxysilan gegeben. Das so erhaltene Gemisch wird 1,5 Stunden auf 140° C erwärmt. Dann wird auf 30° C gekühlt und mit 5 ml 10 %-iger Salzsäure vermischt. Durch Erwärmen auf bis zu 140° C werden schließlich 10 g des Kolbeninhalts abdestilliert und das so erhaltene Organopolysiloxan durch Filtrieren von KCl befreit. Das so erhaltene Organopolysiloxan enthält 3,5 % Stickstoff, bezogen auf sein Gewicht.

## Beispiel 1

40 g des Organopolysiloxans mit basischem Stickstoff, dessen Herstellung oben unter c) beschrieben wurde, werden mit 5 g Eisessig, 80 g des Organopolysiloxans der Summenformel

$CH_3\ Si(OC_2H_5)_{0,8}O_{1,1}$

und dem durchschnittlichen Molekulargewicht von 600 g/Mol und 10 g Essigsäure-n-butylester vermischt und auf 90° C erwärmt, wobei sich eine klare Mischung bildet. Ein Teil dieser Mischung wird mit 500 Teilen Wasser vermischt. Die so erhaltene durchsichtige Mischung wird mit Perlit in

Mengen, die zur Bildung einer streichbaren Paste ausreicht, vermischt. Nach dem Trocknen nimmt der Perlit innerhalb 24 Stunden im Gemisch mit Wasser bei Raumtemperatur nur 13 % Wasser, bezogen auf sein Gewicht auf während bei der gleichen Wasserlagerung unbehandelter Perlit 400 % Wasser, bezogen auf sein Gewicht,aufnimmt.

Vergleichsversuch A

Die in Beispiel 1 beschriebene Arbeitsweise wird wiederholt mit der Abänderung, daß 10 g Ethylenglykol anstelle des Butylacetats verwendet werden. Die Mischung geliert beim Erwärmen auf 90° C.

Vergleichsversuch B

Die in Beispiel 1 beschriebene Arbeitsweise wird wiederholt mit der Abänderung, daß 10 g Glyzerin anstelle des Butylacetats verwendet werden. Die Mischung geliert beim Erwärmen auf 90° C.

Vergleichsversuch C

Die in Beispiel 1 beschreibene Arbeitsweise wird wiederholt mit der Abänderung, daß 10 g Methanol anstelle des Butylacetats verwendet werden. Die Mischung ist auch nach 20 Stunden Erwärmen auf 90° C noch nicht klar. Beim Verdünnen mit Wasser wird ein milchiges Gemisch, dessen Phasen sich rasch trennen, erhalten.

Beispiel 2

Die in Beispiel 1 beschriebene Arbeitsweise wird wiederholt mit der Abänderung, daß anstelle der 10 g Butylacetat 10 g
Dimethyldimethoxysilan bzw.
Dimethyldiethoxysilan bzw.
Phenyltrimethoxysilan bzw.
Isooktyltrimethoxysilan bzw.
n-Oktyltrimethoxysilan bzw.
n-Oktadecyltrimethoxysilan bzw.
Vinyltrimethoxysilan bzw.
Hexamethyldisiloxan bzw.
1,1,3,3-Tetramethoxy-1,3-dimethyldisiloxan bzw.
1,1,3,3-Tetramethyl-1,3-divinyldisiloxan verwendet werden.

Es werden jeweils die gleichen Ergebnisse, einschließlich des Ergebnisses bei der Behandlung von Perlit erhalten.

Beispiel 3

40 g des Organopolysiloxans mit basischem Stickstoff, dessen Herstellung oben unter a) beschrieben wurde, werden mit 20 g Eisessig, 20 g Toluol und 20 g eines durch Trimethylsiloxy gruppen endblockierten Methylhydrogenpolysiloxans mit einer Viskosität von etwa 20 $mm^2.s^{-1}$ vermischt und 20 Minuten geschüttelt, wobei sich eine klare Lösung bildet. Ein Teil dieser Mischung wird mit 199 Teilen Wasser vermischt, wobei sich eine durchsichtige Mischung bildet, die als Anmachwasser für Gips verwendet wird. Nach 2-stündiger Lagerung der so erhaltenen Probekörper aus erstarrtem Gips bei Raumtemperatur unter Wasser hat der Gips weniger als 10 % Wasser, bezogen auf sein Gewicht, aufgenommen.

Beispiel 4

100 g des Organopolysiloxans mit basischem Stickstoff, dessen Herstellung oben unter b) beschrieben wurde, werden mit 50 g Eisessig, 25 g Essigsäure-n-butylester und 100 g des Organopolysiloxans mit der Summenformel
$CH_3\ Si(OC_2H_5)_{0,8}O_{1,1}$
und dem Molekulargewicht von 600 g/Mol vermischt und 9 Stunden auf 90° C erwärmt, wobei sich eine klare Lösung bildet. Ein Teil dieser Mischung wird mit 500 Teilen Wasser verdünnt und wie in Beispiel 1 beschrieben, zum Wasserabweisendmachen von Perlit verwendet. Es wird das gleiche Ergebnis wie in Beispiel 1 erhalten.

Beispiel 5

40 g des Organopolysiloxans mit basischem Stickstoff, dessen Herstellung oben unter c) beschrieben wurde, werden mit 5 g Eisessig, 10 g Dimethyldimethoxysilan und 80 g des in Beispiel 4 näher beschriebenen Organopolysiloxans mit dem Molekulargewicht von 600 g/Mol vermischt und 4,75 Stunden auf 90° C erwärmt, wobei sich eine klare Lösung bildet. 3,5 Teile dieser Mischung werden 96,5 Teilen einer wäßrigen, handelsüblichen Kalkfarbe zugesetzt. Nach dem Trocknen eines Anstrichs aus dieser Kalkfarbe verdunstet ein Wassertropfen auf diesem Anstrich, bevor er in den Anstrich eingedrungen ist.

Das gleiche Ergebnis wird bei Ersatz der Kalkfarbe durch eine handelsübliche Silikatfarbe erhalten.

Beispiel 6

200 g des Organopolysiloxans mit basischem Stickstoff, dessen Herstellung oben unter e) beschrieben wurde, werden mit 100 g Eisessig, 20 g n-Hexanol und 100 g Isooktyltrimethoxysilan vermischt und 3 Stunden auf 90° C erwärmt, wobei sich eine klare Lösung bildet. Ein Teil dieser Mischung wird mit 9 Teilen Wasser verdünnt, wobei sich eine durchsichtige Mischung ergibt, die durch ein Loch in eine Backsteinmauer innerhalb 24 Stunden unter jeweiligem Wiederauffüllen der aufgesogenen Flüssigkeit eingebracht wird. Dadurch wird eine Sperre gegenüber in der Mauer aufsteigendem Wasser erzielt.

Beispiel 7

40 g des Organopolysiloxans mit basischem Stickstoff, dessen Herstellung oben unter f) beschrieben wurde, werden mit 5 g Eisessig, 20 g Amylalkohol und 80 g Isooktyltrimethoxysilan vermischt und 3 Stunden auf 90° C erwärmt, wobei sich eine klare Lösung bildet. Ein Teil dieser Mischung wird mit 5 Teilen Wasser verdünnt, wodurch eine durchsichtige Mischung erhalten wird. Diese Mischung wird in einer Menge von 2 % in die zur Herstellung von Gasbeton verwendeten übrigen Bestandteile vor deren Formgebung eingemischt. Nach der Aushärtung wird ein Gasbeton mit hohem Ausmaß der Wasserabweisung erhalten.

Beispiel 8

20 g des Organopolysiloxans mit basischem Stickstoff, dessen Herstellung oben unter g) beschrieben wurde, werden mit 10 g Eisessig, 10 g n-Hexanol und 40 g des durch Trimethylsiloxy gruppen endblockierten Methylhydrogenpolysiloxans mit einer Viskosität von 20 $mm^2.s^{-1}$ bei 25° C vermischt, wobei bei Raumtemperatur innerhalb 20 Minuten eine klare Lösung erhalten wird. 5 Teile dieser Lösung werden mit 95 Teilen Wasser verdünnt, wodurch eine durchsichtige Mischung erhalten wird, in die handelsübliches Filterpapier getaucht wird. Nachdem das Filterpapier 18 Stunden bei 70° C getrocknet wurde, ist bei Besprühen mit Wasser keine Benetzung des Papiers, das sich in Griff und Handbarkeit von unbehandeltem Filterpapier nicht unterscheidet, festzustellen.

Beispiel 9

40 g des Organopolysiloxans mit basischem Stickstoff, dessen Herstellung oben unter b) beschrieben wurde, werden mit 20 g Eisessig, 20 g Amylalkohol und 120 g des in Beispiel 4 näher beschriebenen Organopolysiloxans mit dem Molekulargewicht von 600 g/Mol vermischt und 3 Stunden auf 90° C erwärmt, wobei sich eine klare Lösung bildet. Ein Teil dieser Mischung wird mit 9 Teilen Wasser verdünnt, wobei sich eine durchsichtige Mischung ergibt, die in einen zur kathodischen Elektrotauchlackierung herkömmlichen Elektrophoresetrog gegossen wird. An der Kathode wird ein Eisenblech bei einer Spannung von 55 V innerhalb 3 Minuten mit einem Film mit einer Dicke von etwa 150 mikrometer beschichtet, der nach einer Stunde Erwärmen auf 150° C ausgezeichnete Wasserabweisung aufweist.

## Ansprüche

1. Bei Verdünnen mit Wasser durchsichtige Gemische ergebende, Polysiloxan enthaltende Zusammensetzungen, die als wesentliche Bestandteile
   (A) Salz von wasserlöslicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, und
   (B) organische Siliciumverbindung mit basischem Stickstoff in Mengen von 0 bis 0,5 Gewichtsprozent, bezogen auf das Gewicht solcher organischer Siliciumverbindung, enthalten, **dadurch gekennzeichnet** daß sie frei von wasserlöslichem Lösungsmittel oder Oktanolen sind oder solches Lösungsmittel oder Oktanole in Mengen von höchstens 5 Gewichtsprozent, bezogen auf das Gewicht von Bestandteil (A), enthalten.

2. Zusammensetzungen nach Anspruch 1, **dadurch gekennzeichnet**, daß sie, zumindest wenn Bestandteil (B) nicht zu mindestens 0,1 Teilen je Gewichtsteil Bestandteil (A) aus mindestens einer organischen Siliciumverbindung mit einem Molekulargewicht von höchstens 600 g/Mol besteht, zusätzlich als Bestandteil (C) organisches Lösungsmittel, das bei 20° C und 1020 hPa (abs.) höchstens zu einem Gewichtsteil in 100 Gewichtsteilen Wasser löslich und von Halogenatomen frei ist, mit Ausnahme von Oktanolen, enthalten.

3. Organopolysiloxane, die in ein und demselben Molekül sowohl Si-gebundenen Wasserstoff als auch mindestens einen SiC-gebundenen Rest

mit basischen Stickstoff aufweisen.

**4.** organopolysiloxane nach Anspruch 3, **dadurch gekennzeichnet**, daß sie durch Äquilibrieren von durch Trimethylsiloxygruppen endblockiertem Methylhydrogenpolysiloxan mit gamma-Aminoethylaminopropyltrimethoxysilan erhältlich sind.

Patentansprüche für folgenden Vertragsstaat : AT

**1.** Bei Verdünnen mit Wasser durchsichtige Gemische ergebende, Polysiloxan enthaltende Zusammensetzungen, die als wesentliche Bestandteile

(A) Salz von wasserlöslicher organischer oder anorganischer Säure und Polysiloxan, das zusätzlich zu anderen Siloxaneinheiten solche Siloxaneinheiten enthält, die einwertige, SiC-gebundene Reste mit basischem Stickstoff in Mengen von mindestens 0,5 Gewichtsprozent basischem Stickstoff, bezogen auf das Gewicht dieses Polysiloxans, aufweisen, und

(B) organische Siliciumverbindung mit basischem Stickstoff in Mengen von 0 bis 0,5 Gewichtsprozent, bezogen auf das Gewicht solcher organischer Siliciumverbindung, enthalten, **dadurch gekennzeichnet**, daß sie frei von wasserlöslichem Lösungsmittel oder Oktanolen sind oder solches Lösungsmittel oder Oktanole in Mengen von höchstens 5 Gewichtsprozent, bezogen auf das Gewicht von Bestandteil (A), enthalten.

**2.** Zusammensetzungen nach Anspruch 1, **dadurch gekennzeichnet**, daß sie, zumindest wenn Bestandteil nicht zu mindestens 0,1 Teilen je Gewichtsteil Bestandteil aus mindestens einer organischen Siliciumverbindung mit einem Molekulargewicht von höchstens 600 g/Mol besteht, zusätzlich als Bestandteil J<> organisches Lösungsmittel, das bei 20−< und 1020 hPa höchstens zu einem Gewichtsteil in 100 Gewichtsteilen Wasser löslich und von Halogenatomen frei ist, mit Ausnahme von Oktanolen, enthalten.

## Claims

**1.** Polysiloxane-containing compositions which form transparent mixtures upon dilution with water and contain as the essential constituents

(A) a salt of a water-soluble organic or inorganic acid and a polysiloxane which, in addition to other siloxane units, contains siloxane units which carry monovalent SiC-bonded radicals containing basic nitrogen in amounts of at least 0.5 per cent by weight of basic nitrogen, based on the weight of this polysiloxane, and

(B) an organic silicon compound containing basic nitrogen in amounts of 0 to 0.5 per cent by weight, based on the weight of this organic silicon compound, characterized in that they are free from a water-soluble solvent or octanols or contain such a solvent or octanols in amounts of not more than 5 per cent by weight, based on the weight of constituent (A).

**2.** Compositions according to Claim 1, characterized in that, at least if constituent (B) does not consist to the extent of at least 0.1 part per part by weight of constituent (A) of at least one organic silicon compound having a molecular weight of not more than 600 g/mol, they additionally contain, as constituent (C), an organic solvent which is soluble in water in an amount of not more than one part by weight in 100 parts by weight at 20 °C under 1020 hPa (absolute) and is free from halogen atoms, with the exception of octanols.

**3.** Organopolysiloxanes which contain, in one and the same molecule, both Si-bonded hydrogen and at least one SiC-bonded radical containing basic nitrogen.

**4.** Organopolysiloxanes according to Claim 3, characterized in that they are obtainable by equilibration of a methylhydridopolysiloxane blocked by trimethylsiloxy end groups with gamma-aminoethylaminopropyltrimethoxysilane.

Claims for the following Contracting State: AT

**1.** Polysiloxane-containing compositions which form transparent mixtures upon dilution with water and contain as the essential constituents

(A) a salt of a water-soluble organic or inorganic acid and a polysiloxane which, in addition to other siloxane units, contains siloxane units which carry monovalent SiC-bonded radicals containing basic nitrogen in amounts of at least 0.5 per cent by weight of basic nitrogen, based on the weight of this polysiloxane, and

(B) an organic silicon compound containing basic nitrogen in amounts of 0 to 0.5 per cent by weight, based on the weight of this organic silicon compound, characterized in that they are free from a water-soluble solvent or octanols or contain such a solvent or octanols in amounts of not more than 5 per

cent by weight, based on the weight of constituent (A).

2. Compositions according to Claim 1, characterized in that, at least if constituent (B) does not consist to the extent of at least 0.1 part per part by weight of constituent (A) of at least one organic silicon compound having a molecular weight of not more than 600 g/mol, they additionally contain, as constituent (C), an organic solvent which is soluble in water in an amount of not more than one part by weight in 100 parts by weight at 20°C under 1020 hPa (absolute) and is free from halogen atoms, with the exception of octanols.

**Revendications**

1. Compositions contenant un polysiloxane et donnant, lorsqu'on les dilue a l'eau, des mélanges transparents, compositions qui renferment comme constituants essentiels :
   (A) un sel d'un acide minéral ou organique soluble dans l'eau et d'un polysiloxane qui, en plus d'autres motifs siloxaniques, contient des motifs siloxaniques dans lesquels il y a des radicaux univalents, à azote basique, unis par une liaison Si-C en des quantités correspondant à une teneur en azote basique d'au moins 0,5 % en poids par rapport au poids de ce polysiloxane et
   (B) un composé organique du silicum renfermant de l'azote basique en des quantités de 0 à 0,5 % en poids par rapport au poids de ce composé organique du silicium, lesdites compositions étant caractérisées en ce qu'elles sont dépourvues de solvant soluble dans l'eau ou d'octanols ou contiennent un tel solvant ou des octanols en des quantités d'au plus 5 % en poids par rapport au poids du constituant (A).

2. Compositions selon la revendication 1 caractérisées en ce qu'elles contiennent en outre, du moins lorsque le constituant (B) n'est pas constitué, pour au moins 0,1 partie par partie en poids du constituant (A), d'au moins un composé organique du silicium ayant une masse moléculaire d'au plus 600 g/mol, comme constituant (C) un solvant organique qui est dépourvu d'atomes d'halogènes et qui est soluble, a 20°C et sous 1020 hPa (pression absolue), à raison d'au plus 1 partie en poids dans 100 parties en poids d'eau, à l'exception des octanols.

3. Polyorganosilanes qui contiennent, dans une seule et même molécule, à la fois de l'hydrogène lié a Si et au moins un radical à liaison Si-C qui renferme de l'azote basique.

4. Polyorganosiloxanes selon la revendication 3 caractérisés en ce qu'ils peuvent être obtenus par équilibrage d'un poly-méthyl-hydrogénosiloxane à radicaux triméthyl-silyloxy terminaux avec l'(aminoéthylamino-3 propyl)- triméthoxysilane.

Revendications pour l'Etat contractant suivant: AT

1. Compositions contenant un polysiloxane et donnant, lorsqu'on les dilue à l'eau, des mélanges transparents, compositions qui renferment comme constituants essentiels :
   (A) un sel d'un acide minéral ou organique soluble dans l'eau et d'un polysiloxane qui, en plus d'autres motifs siloxaniques, contient des motifs siloxaniques dans lesquels il y a des radicaux univalents, à azote basique, unis par une liaison Si-C en des quantités correspondant à une teneur en azote basique d'au moins 0,5 % en poids par rapport au.poids de ce polysiloxane et
   (B) un composé organique du silicum renfermant de l'azote basique en des quantités de 0 à 0,5 % en poids par rapport au poids de ce composé organique du silicium, lesdites compositions étant caractérisées en ce qu'elles sont dépourvues de solvant soluble dans l'eau ou d'octanols ou contiennent un tel solvant ou des octanols en des quantités d'au plus 5 % en poids par rapport au poids du constituant (A).

2. Compositions selon la revendication 1 caractérisées en ce qu'elles contiennent en outre, du moins lorsque le consttuant (B) n'est pas constitué, pour au moins 0,1 partie par partie en poids du constituant (A), d'au moins un composé organique du silicium ayant une masse moléculaire d'au plus 600 g/mol, comme constituant (C) un solvant organique qui est dépourvu d'atomes d'halogènes et qui est soluble, à 20°C et sous 1020 hPa (pression absolue), à raison d'au plus 1 partie en poids dans 100 parties en poids d'eau, à l'exception des octanols.